(19) Europäisches Patentamt
European Patent Office
Office européen des brevets

(11) **EP 4 525 115 A1**

(12) **EUROPEAN PATENT APPLICATION**
published in accordance with Art. 153(4) EPC

(43) Date of publication:
**19.03.2025 Bulletin 2025/12**

(21) Application number: **23815552.7**

(22) Date of filing: **30.03.2023**

(51) International Patent Classification (IPC):
***H01M 10/0525*** (2010.01)    ***H01M 4/587*** (2010.01)

(52) Cooperative Patent Classification (CPC):
**H01M 4/587; H01M 10/0525**

(86) International application number:
**PCT/JP2023/013035**

(87) International publication number:
**WO 2023/233790 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022 JP 2022089223**

(71) Applicant: **GS Yuasa International Ltd.**
**Kisshoin, Minami-ku,**
**Kyoto-shi, Kyoto 601-8520 (JP)**

(72) Inventors:
• **KANEKO Takashi**
**Kyoto-shi, Kyoto 601-8520 (JP)**
• **NAKAI Kenta**
**Kyoto-shi, Kyoto 601-8520 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **POWER STORAGE ELEMENT**

(57)    An energy storage device according to an aspect of the present invention includes a positive electrode including a positive active material layer and a negative electrode including a negative active material layer, the rated capacity per facing area between the positive active material layer and the negative active material layer is 0.59 mAh/cm$^2$ or more and 0.90 mAh/cm$^2$ or less, and the negative active material layer includes solid graphite.

Fig. 1

**Description**

TECHNICAL FIELD

The present invention relates to an energy storage device.

BACKGROUND ART

Nonaqueous electrolyte solution secondary batteries typified by lithium ion secondary batteries are widely used for electronic devices such as personal computers and communication terminals, motor vehicles, and the like since these secondary batteries have a high energy density. Also, capacitors such as lithium ion capacitors and electric double-layer capacitors, energy storage devices with electrolyte solutions other than nonaqueous electrolyte solutions used, and the like are also widely used as energy storage devices other than nonaqueous electrolyte solution secondary batteries.

The energy storage device generally includes an electrode assembly in which a positive electrode including a positive active material and a negative electrode including a negative active material are stacked with a separator interposed therebetween. Such an electrode assembly is housed together with an electrolyte in a case to construct an energy storage device. As the negative active material, a carbon material such as graphite is widely used (see Patent Documents 1 and 2).

PRIOR ART DOCUMENTS

PATENT DOCUMENTS

**[0004]**

　　　　Patent Document 1: JP-A-2005-222933
　　　　Patent Document 2: JP-A-2017-069039

SUMMARY OF THE INVENTION

PROBLEMS TO BE SOLVED BY THE INVENTION

The energy storage device is required to have a high capacity density, high power, and the like. In order to increase the capacity per facing area between the positive active material layer and the negative active material layer in view of the capacity density, it is conceivable to reduce the facing area between the positive active material layer and the negative active material layer by increasing the thickness of the positive active material layer and negative active material layer, decreasing the porosity of the positive active material layer and the negative active material layer, or the like. In this case, however, a resistance of the energy storage device tends to be increased, thereby decreasing the power. As described above, the energy storage device generally has a trade-off relationship between the capacity density and the power, and thus, it is not easy to increase the power while increasing the capacity density.

An object of the present invention is to provide an energy storage device that has high power and has a balance achieved between a high capacity density and the high power.

MEANS FOR SOLVING THE PROBLEMS

An energy storage device according to an aspect of the present invention includes a positive electrode including a positive active material layer and a negative electrode including a negative active material layer, the rated capacity per facing area between the positive active material layer and the negative active material layer is 0.59 mAh/cm$^2$ or more and 0.90 mAh/cm$^2$ or less, and the negative active material layer includes solid graphite.

ADVANTAGES OF THE INVENTION

According to an aspect of the present invention, it is possible to provide an energy storage device that has high power and has a balance achieved between a high capacity density and the high power.

BRIEF DESCRIPTION OF THE DRAWINGS

Fig. 1 is a see-through perspective view illustrating an embodiment of an energy storage device.

Fig. 2 is a schematic diagram illustrating an embodiment of an energy storage apparatus including a plurality of energy storage devices.

MODE FOR CARRYING OUT THE INVENTION

First, an outline of an energy storage device disclosed in the present specification will be described.

[1] An energy storage device according to an aspect of the present invention includes a positive electrode including a positive active material layer and a negative electrode including a negative active material layer, the rated capacity per facing area between the positive active material layer and the negative active material layer is 0.59 mAh/cm$^2$ or more and 0.90 mAh/cm$^2$ or less, and the negative active material layer includes solid graphite.

The energy storage device according to [1] has high power, and achieves a balance between a high capacity density and the high power. The reason therefor is not clear, but the following reason is presumed. The energy storage device according to [1] has a rated capacity of 0.59 mAh/cm$^2$ or more per facing area between the positive active material layer and the negative active material layer (hereinafter, referred to also as "capacity density"), and has a high capacity density. When the capacity density exceeds 0.90 mAh/cm$^2$, because of the thick positive active material layer and negative active material layer or the low porosity of the positive active material layer and negative active material layer, the resistance of the energy storage device tends to be increased, thereby decreasing the power. In addition, when hollow graphite is used as the negative active material, an electrolyte penetrates into voids inside the particles of the hollow graphite, and a high-resistance film derived from a decomposition product of the electrolyte is likely to be formed even inside the particles. Also in this case, the resistance of the energy storage device tends to be increased, thereby decreasing the power. In contrast, when solid graphite is used as the negative active material, a high-resistance film is less likely to be formed inside the solid graphite particles, and thus, the resistance of the energy storage device is kept from being increased, thereby sufficiently increasing the power. From the foregoing, the energy storage device according to [1] is presumed to have high power, and achieve a balance between a high capacity density and the high power.

[2] In the energy storage device according to [1], the negative active material layer may have an average thickness of 20 μm or more and 60 μm or less.

The energy storage device according to [2] allows the capacity density and the power to be enhanced in a well-balanced manner.

[3] In the energy storage device according to [1] or [2], the negative active material layer may have a porosity of 25% or more and 50% or less.

The energy storage device according to [3] allows the capacity density and the power to be enhanced in a well-balanced manner.

[4] In the energy storage device according to any one of [1] to [3], the facing area between the positive active material layer and the negative active material layer may be 4000cm$^2$ or more and 10,000 cm$^2$ or less.

In the energy storage device according to [4], the facing area between the positive active material layer and the negative active material layer is 4000cm$^2$ or more, thereby allowing the power of the energy storage device to be increased. In addition, the facing area between the positive active material layer and the negative active material layer is 10,000 cm$^2$ or less, thereby allowing the capacity density to be increased.

[5] In the energy storage device according to any one of [1] to [4], the rated capacity may be 3.7Ah or more.

In the energy storage device according to [5], the capacity is relatively high, thus allowing the above-mentioned effect to be efficiently produced. Accordingly, the energy storage device is particularly suitable as an energy storage device.

[6] The energy storage device according to any one of [1] to [5] may be intended for a hybrid electric vehicle.

The energy storage device according to [6] is particularly useful as a power source for a hybrid electric vehicle that requires a high capacity density and high power, because the energy storage device has high power and achieves a balance between a high capacity density and the high power.

The "facing area between the positive active material layer and the negative active material layer" refers to an area where the positive active material layer and the negative active material layer face each other with, for example, a separator interposed therebetween, or directly face each other.

The "rated capacity" is a capacity (Ah) for use in indicating the capacity of the energy storage device. More specifically, the "rated capacity" is a capacity indicated on the energy storage device and an instruction manual, a specification, a catalog or the like attached to the energy storage device. Further, when the rated capacity is represented in unit of "kWh" as an amount of energy, the rated capacity (Ah) can be calculated by dividing the amount by the nominal voltage. In this regard, the "nominal voltage" is a voltage (V) for use in indicating the voltage of the energy storage device. More specifically, the "nominal voltage" is a voltage indicated on the energy storage device and an instruction manual, a specification, a catalog or the like attached to the energy storage device.

The term "graphite" refers to a carbon material in which the average lattice spacing ($d_{002}$) of a (002) plane determined by an X-ray diffraction method before charge-discharge or in a discharged state is 0.33 nm or more and less than 0.34 nm. In this regard, the "discharged state" of the carbon material means a state discharged such that charge-transporting ions that can be occluded and released in association with charge-discharge are sufficiently released from the carbon material that is a negative active material. For example, the "discharged state" refers to a state where the open circuit voltage is 0.7 V or higher in a half cell that has, as a working electrode, a negative electrode including a carbon material as a negative active material, and has metal Li as a counter electrode.

The term "solid" of the solid graphite means that the inside of the particle of the graphite is filled substantially without voids. More specifically, being "solid" means that in a cross section of a particle observed in a SEM image acquired with the use of a scanning electron microscope (SEM), the void area ratio (porosity) in the particle to the area of the whole particle is 2% or less. In a preferable aspect, the void area ratio of the solid graphite may be 1% or less, 0.7% or less, or 0.5% or less. The lower limit of the area ratio (porosity) may be 0%.

"The void area ratio (porosity) in the particle to the area of the whole particle" in the graphite particles can be determined by the following procedure.

(1) Preparation of sample for measurement

The negative electrode to be measured is fixed with a thermosetting resin. A cross section polisher is used to expose a cross section of the negative electrode fixed with the resin to prepare a sample for measurement. It is to be noted that the negative electrode to be measured are prepared in accordance with the following procedure. When the negative electrode before assembling the energy storage device can be prepared, the negative electrode is used as it is. In the case of preparing from the assembled energy storage device, first, the energy storage device is subjected to constant current discharge at a current of 0.1C to an end-of-discharge voltage under normal usage, into a discharged state. The energy storage device in the discharged state is disassembled, the negative electrode is taken out, then sufficiently washed with a dimethyl carbonate, and then dried under reduced pressure at room temperature for 24 hours. The operations from the disassembly of the energy storage device to the preparation of the negative electrode to be measured are performed in a dry air atmosphere with a dew point of -40°C or lower.

The term of "under normal usage" refers to a case of using the energy storage device while employing charge-discharge conditions recommended or specified for the energy storage device, and when a device for using the energy storage device is prepared, refers to a case of using the energy storage device with the device applied.

(2) Acquisition of SEM image

For acquiring the SEM image, JSM-7001F (manufactured by JEOL Ltd.) is used as a scanning electron microscope. For the SEM image, a secondary electron image is observed. The acceleration voltage is 15 kV. The observation magnification is set such that the number of graphite particles appearing in one field of view is three or more and fifteen or less. The obtained SEM image is stored as an image file. In addition, various conditions such as a spot diameter, a working distance, an irradiation current, luminance, and a focus are appropriately set so as to make the contours of the graphite particles clear.

(3) Cut-out of contour of graphite particle

The contour of the graphite particle is cut out from the acquired SEM image by using an image cutting function of image editing software Adobe Photoshop Elements 11. The contour is cut out by using a quick selection tool to select the outside of the contour of the graphite particle and edit the part excluding the graphite particle to a black background. In this regard, when the number of graphite particles from which the contours have been able to be cut out is less than three, an SEM image is acquired again, and the cut-out is performed until the number of graphite particles from which the contours have been able to be cut out is three or more.

(4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the higher-concentration side is calculated as an "area S1 of voids in the particle".

Then, the image of the same first graphite particle is subjected to binarization processing with a concentration of 10% as a threshold value. The outer edge of the graphite particle is determined by the binarization processing, and the area inside the outer edge is calculated as an "area S0 of the whole particle".

The ratio (S 1/S0) of S1 to S0 is calculated with the use of S1 and S0 calculated above to calculate an "area ratio R1 of voids in the particle to the area of the whole particle" in the first graphite particle.

The images of the second and subsequent graphite particles among the cut-out graphite particles are also each subjected to the binarization processing mentioned above, and the areas S1 and S0 are calculated. Based on the calculated area S1 and area S0, area ratios R2, R3, ... of voids of the respective graphite particles are calculated.

(5) Determination of void area ratio

The average value for all of the area ratios R1, R2, R3, ... of the voids, calculated by the binarization processing is calculated to determine "the area ratio (porosity) of voids in the particles to the total area of the particles".

It is to be noted that, instead of the scanning electron microscope used for "acquisition of SEM image", the image editing software used for "cut-out of contour of graphite particle", and the image analysis software used for the "binarization processing", apparatuses, software, and the like capable of the corresponding measurement, image editing, and image analysis may be used.

An energy storage device according to an embodiment of the present invention, an energy storage apparatus, a method for manufacturing the energy storage device, and other embodiments will be described in detail. It is to be noted that the names of the respective constituent members (respective constituent elements) for use in the respective embodiments may be different from the names of the respective constituent members (respective constituent elements) for use in the background art.

<Energy storage device>

An energy storage device according to an embodiment of the present invention includes: an electrode assembly including a positive electrode, a negative electrode, and a separator; an electrolyte; and a case that houses the electrode assembly and the electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The positive electrode includes a positive active material layer, and the negative electrode includes a negative active material layer. In an embodiment of the present invention, the positive active material layer and the negative active material layer face each other with the separator interposed therebetween to construct the electrode assembly. The electrode assembly may have a part where the positive active material layer and the negative active material layer do not face each other. The electrolyte is present with the positive electrode, negative electrode, and separator impregnated with the electrolyte. As an example of the energy storage device, a nonaqueous electrolyte secondary battery (hereinafter, also referred to simply as a "secondary battery") with a nonaqueous electrolyte used as the electrolyte will be described.

(Positive electrode)

The positive electrode includes a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of $10^{-2}\,\Omega\cdot$cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 $\mu$m or more and 50 $\mu$m or less, more preferably 5 $\mu$m or more and 40 $\mu$m or less, still more preferably 8 $\mu$m or more and 30 $\mu$m or less, particularly preferably 10 $\mu$m or more and 25 $\mu$m or less. The average thickness of the positive substrate falls within the range mentioned above, thereby allowing the energy density per volume of the energy storage device to be increased while increasing the strength of the positive substrate. The "average thickness" for the positive substrate and the negative substrate described below refers to a value obtained by dividing a cutout mass in cutout of a substrate that has a predetermined area by a true density and a cutout area of the substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, and a filler, if necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-NaFeO$_2$-type crystal structure, lithium-transition metal oxides that have a spinel-type crystal structure, polyanion compounds, chalcogenides, and sulfur. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < y < 1$, $0 < 1$-x-y), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < y < 1$, $0 < 1$-x-y), Li[Li$_x$Ni$_\gamma$Mn$_\beta$Co$_{(1-x-\gamma-\beta)}$]O$_2$ ($0 \leq x < 0.5$, $0 < y$, $0 < \beta$, $0.5 < y + \beta < 1$, $0 < 1$-x-$\gamma$-$\beta$), and Li[Li$_x$Ni$_\gamma$Co$_\beta$Al$_{(1-x-\gamma-\beta)}$]O$_2$ ($0 \leq x < 0.5$, $0 < y$, $0 < \beta$, $0.5 < y + \beta < 1$, $0 < 1$-x-$\gamma$-$\beta$). Examples of the lithium-transition metal composite oxides having a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used alone, or two or more thereof may be used in mixture.

The positive active material is typically particles (powder). The average particle size of the positive active material is preferably 0.1 $\mu$m or more and 20 $\mu$m or less, for example. By setting the average particle size of the positive active material to be equal to or greater than the lower limit, the positive active material is easily manufactured or handled. By setting the average particle size of the positive active material to be equal to or less than the upper limit, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the increased energy density and manufacturability of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a composite material of carbon black and CNT may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. The content of the conductive agent falls within the range mentioned above, thereby allowing the energy density of the energy storage device to be increased.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance. When the positive active material layer contains a thickener, the content of the thickener in the positive active material layer can be, for example, 0.1% by mass or more and 10% by mass or less. The content of the thickener in the positive active material layer may be 5% by mass or less, may be 1% by mass or less, and may be 0% by mass.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. When the positive active material layer contains a filler, the content of the filler in the positive active material layer can be, for example, 0.1% by mass or more and 10% by mass or less. The content of the filler in the positive active material layer may be 5% by mass or less, may be 1% by mass or less, and may be 0% by mass.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agents, the binder, the thickener, and the filler.

The average thickness of the positive active material layer is preferably 15 $\mu$m or more and 50 $\mu$m or less, more preferably 20 $\mu$m or more and 45 $\mu$m or less, still more preferably 25 $\mu$m or more and 40 $\mu$m or less. When the average thickness of the positive active material layer falls within the range mentioned above, the capacity density and the power can be enhanced in a more balanced manner. The average thickness for the positive active material layer and the negative active material layer described later refers to the average value of thicknesses measured at arbitrary five points. The average thickness of the positive active material layer is an average thickness per positive active material layer. When the positive active material layer is provided on each of both surfaces of the positive substrate, the average thickness is the average thickness of each of the positive active material layers. The same applies to the average thickness of the negative active material layer described later.

The porosity of the positive active material layer is preferably 35% or more and 47% or less, more preferably 37% or more and 45% or less. When the porosity of the positive active material layer falls within the range mentioned above, the capacity density and the power can be enhanced in a more balanced manner. The porosity of the positive active material layer refers to a value determined by the following formula from the true density of the positive active material layer, calculated from the true density of each component constituting the positive active material layer, and the apparent density of the positive active material layer.

$$\text{Porosity (\%)} = 100 - (\text{Apparent density/True density}) \times 100$$

The apparent density of the positive active material layer refers to a value obtained by dividing the mass of the positive active material layer by the apparent volume of the positive active material layer. The apparent volume refers to a volume including a void part, and can be obtained as the product of the average thickness and area of the positive active material.

The positive electrode can be fabricated, for example, by applying a positive composite paste to a positive substrate directly or with an intermediate layer interposed therebetween, and drying the paste. After the drying, pressing or the like may be performed, if necessary. The positive composite paste includes respective components constituting the positive active material layer, such as the positive active material, and the conductive agent or binder as an optional component. The positive composite paste typically further includes a dispersion medium.

(Negative electrode)

The negative electrode includes a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel or a nickel-plated steel, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 μm or more and 35 μm or less, more preferably 3 μm or more and 30 μm or less, still more preferably 4 μm or more and 25 μm or less, particularly preferably 5 μm or more and 20 μm or less. The average thickness of the negative substrate falls within the range mentioned above, thereby allowing the energy density per volume of the energy storage device to be increased while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material includes solid graphite. The negative active material of the negative electrode includes the solid graphite, thereby allowing the power of the energy storage device to be increased. The solid graphite may be artificial graphite or natural graphite. The artificial graphite is a generic term for artificially produced graphite, and the natural graphite is a generic term for graphite which can be taken from natural minerals. Specific examples of the natural graphite include scale-like graphite (flake graphite), massive graphite, and earthy graphite. The solid graphite may be flattened scale-like natural graphite or spheroidized natural graphite obtained by spheroidizing the scale-like graphite. The solid graphite may be graphite particles, the surfaces of which are subjected to coating (for example, amorphous carbon coating).

The solid graphite may be preferably natural graphite (solid natural graphite). The natural graphite may have four peaks appearing at diffraction angles 2θ in the range from 40° to 50° in an X-ray diffraction pattern obtained with the use of CuKα, measured before charge-discharge or in a discharged state. These four peaks are considered to be two peaks derived from a hexagonal structure and two peaks derived from a rhombohedral structure. In the case of artificial graphite, generally, only two peaks derived from a hexagonal structure are considered to appear. In the X-ray diffraction pattern, the ratio ((012)/(100)) of the peak intensity derived from the (012) plane to the peak intensity derived from the (100) plane is preferably 0.3 or more, more preferably 0.4 or more. The peak intensity ratio ((012)/(100)) is preferably 0.6 or less. In this regard, the (100) plane is derived from the hexagonal structure, and the (012) plane is derived from the rhombohedral structure.

The average particle size of the solid graphite is, for example, preferably 1 μm or more and 100 μm or less, more preferably 2 μm or more and 50 μm or less, still more preferably 3 μm or more and 30 μm or less, even more preferably 5 μm or more and 20 μm or less. By setting the average particle size of the solid graphite to be equal to or greater than the lower limit, the solid graphite is easily manufactured or handled. Setting the average particle size of the solid graphite to be equal to or less than the upper limit tends to improve the electron conductivity of the negative active material layer, and further increase the power of the energy storage device. In addition, setting the average particle size of the solid graphite to be equal to or less than the upper limit tends to densify the negative active material layer, and also further increase the energy density of the energy storage device. A crusher, a classifier, or the like is used in order to obtain the solid graphite with a predetermined particle size. The crushing method and classification method can be selected from, for example, the methods exemplified for the positive electrode.

The aspect ratio of the solid graphite is preferably 1 or more and 5 or less, more preferably 1.5 or more and 4 or less, still more preferably 2 or more and 3 or less. When the aspect ratio of the solid graphite falls within the range mentioned above, the resistance of the negative active material layer tends to be sufficiently decreased, and the power of the energy storage device tends to be further increased. When the aspect ratio of the solid graphite falls within the range mentioned above, the negative active material layer tends to be densified, and the energy density of the energy storage device also tends to be increased. The aspect ratio means the ratio A/B of the longest diameter A of a particle to the longest diameter B in a direction perpendicular to the diameter A in a cross section of the particle observed in a SEM image acquired with the use of a SEM. The SEM image for the determination of the aspect ratio can be obtained by the same method as in the case of determining the area ratio (porosity) of voids in the particles to the total area of the particles for the graphite particles mentioned above.

The content of the solid graphite in the negative active material layer is preferably 60% by mass or more and 99% by mass or less, more preferably 90% by mass or more and 98% by mass or less, and is still more preferably 95% by mass or more, 97% by mass or more, or 98% by mass or more in some cases. The content of the solid graphite falls within the range mentioned above, thereby allowing the power of the energy storage device to be further increased.

The negative active material may include other negative active materials besides the solid graphite. Examples of the other negative active materials include metal Li; metals or metalloids such as Si and Sn; metal oxides or metalloid oxides such as oxides of Si, oxides of Ti, and oxides of Sn; titanium-containing oxides such as $Li_4Ti_5O_{12}$, $LiTiO_2$, and $TiNb_2O_7$; polyphosphoric acid compounds; silicon carbides; and carbon materials such as graphite other than the solid graphite and non-graphitic carbon (easily graphitizable carbon or hardly graphitizable carbon). However, the content ratio of the solid graphite to all of the negative active materials is preferably 80% by mass or more, more preferably 90% by mass or more, still more preferably 99% by mass or more, yet still more preferably 99.9% by mass or more, particularly preferably 100% by mass. As described above, when the negative active material substantially includes only solid graphite, the power of the energy storage device under can be further increased.

The term "non-graphitic carbon" refers to a carbon material in which the average lattice spacing ($d_{002}$) of a (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol-derived material.

The term "hardly graphitizable carbon" refers to a carbon material in which the $d_{002}$ is 0.36 nm or more and 0.42 nm or less.

The term "easily graphitizable carbon" refers to a carbon material in which the $d_{002}$ is 0.34 nm or more and less than 0.36 nm.

The content of all of the negative active materials in the negative active material layer is preferably 60% by mass or more and 99% by mass or less, more preferably 90% by mass or more and 98% by mass or less, and is still more preferably 95% by mass or more, 97% by mass or more, or 98% by mass or more in some cases. The content of the negative active material falls within the range mentioned above, thereby allowing a balance to be achieved between the increased energy density and productivity of the negative active material layer.

When a conductive agent is contained in the negative active material layer, the content of the conductive agent in the negative active material layer may be, for example, 1% by mass or more and 10% by mass or less. The content of the conductive agent in the negative active material layer is preferably 5% by mass or less, and may be more preferably 2% by mass or less, 1% by mass or less, 0.1% by mass or less, or 0% by mass. When the content of the conductive agent in the negative active material layer is low, or when no conductive agent is contained, the content of the negative active material can be increased, and the energy density and the like of the energy storage device can be increased.

The content of the binder in the negative active material layer is preferably 0.1% by mass or more and 10% by mass or less, more preferably 1% by mass or more and 5% by mass or less. The content of the binder falls within the range mentioned above, thereby allowing the negative active material to be stably held.

The content of the thickener in the negative active material layer is preferably 0.1% by mass or more and 5% by mass or less, more preferably 0.5% by mass or more and 2% by mass or less.

When the negative active material layer contains a filler, the content of the filler in the negative active material layer can be, for example, 0.1% by mass or more and 10% by mass or less. The content of the filler in the negative active material layer may be 5% by mass or less, may be 1% by mass or less, and may be 0% by mass. When the content of the filler in the negative active material layer is low, or when no filler is contained, the content of the negative active material can be increased, and the energy density and the like of the energy storage device can be increased.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The average thickness of the negative active material layer is preferably 20 μm or more and 60 μm or less, more preferably 25 μm or more and 55 μm or less, still more preferably 30 μm or more and 50 μm or less. When the average thickness of the negative active material layer falls within the range mentioned above, the capacity density and the power can be enhanced in a more balanced manner.

The porosity of the negative active material layer is preferably 25% or more and 50% or less, more preferably 30% or more and 45% or less. When the porosity of the negative active material layer falls within the range mentioned above, the capacity density and the power can be enhanced in a more balanced manner. The porosity of the negative active material layer can be determined by the same approach as for the above-mentioned porosity of the positive active material layer.

The negative electrode can be fabricated, for example, by applying a negative composite paste to a negative substrate directly or with an intermediate layer interposed therebetween, and drying the paste. After the drying, pressing or the like may be performed, if necessary. The negative composite paste includes respective components constituting the negative active material layer, such as the negative active material including the solid graphite, and the conductive agent or binder as an optional component. The negative composite paste typically further includes a dispersion medium.

(Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or complexes of these substances may be used alone, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

(Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, the inorganic lithium salts are preferable, and $LiPF_6$ is more preferable.

The content of the electrolyte salt in the nonaqueous electrolyte solution is, under 1 atm at 20°C, preferably 0.1 $mol/dm^3$ or more and 2.5 $mol/dm^3$ or less, more preferably 0.3 $mol/dm^3$ or more and 2.0 $mol/dm^3$ or less, still more preferably 0.5 $mol/dm^3$ or more and 1.7 $mol/dm^3$ or less, particularly preferably 0.7 $mol/dm^3$ or more and 1.5 $mol/dm^3$ or

less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds mentioned above, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used alone, or two or more thereof may be used in mixture.

The content of the additive included in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to the total mass of the nonaqueous electrolyte solution. The content of the other additives falls within the range mentioned above, thereby making it possible to improve capacity retention performance or cycle performance after high-temperature storage, and further improve the safety.

For the nonaqueous electrolyte, a solid electrolyte may be used, or a nonaqueous electrolyte solution and a solid electrolyte may be used in combination.

The solid electrolyte can be selected from arbitrary materials with ionic conductivity, which are solid at normal temperature (for example, 15°C to 25°C), such as lithium, sodium, and calcium. Examples of the solid electrolyte include sulfide solid electrolytes, oxide solid electrolytes, nitride solid electrolytes, and polymer solid electrolytes.

Examples of the sulfide solid electrolytes include, in the case of a lithium ion secondary battery, $Li_2S$-$P_2S_5$, LiI-$Li_2S$-$P_2S_5$, and $Li_{10}Ge$-$P_2S_{12}$.

(Rated capacity, applications, etc.)

The capacity density, which is a rated capacity per facing area between the positive active material layer and negative active material layer of the energy storage device according to an embodiment of the present invention, is 0.59 mAh/cm$^2$ or more and 0.90 mAh/cm$^2$ or less. The lower limit of the capacity density may be preferably 0.60 mAh/cm$^2$, 0.65 mAh/cm$^2$, 0.70 mAh/cm$^2$, or 0.75 mAh/cm$^2$. The capacity density is equal to or more than the lower limit mentioned above, thereby increasing the energy density of the energy storage device. On the other hand, the upper limit of the capacity density may be preferably 0.85 mAh/cm$^2$, 0.80 mAh/cm$^2$, 0.75 mAh/cm$^2$, or 0.70 mAh/cm$^2$. The capacity density is equal to or less than the upper limit mentioned above, thereby increasing the power of the energy storage device.

The rated capacity of the energy storage device according to an embodiment of the present invention is preferably 3.7Ah or more and 10Ah or less. The lower limit of the rated capacity may be more preferably 3.8 Ah, 3.9 Ah, 4.0 Ah, 4.1 Ah, or 4.2 Ah. The energy storage device is suitable particularly as such an energy storage device with a relatively high rated capacity. The upper limit of the rated capacity may be 9 Ah, 8 Ah, 7 Ah, 6 Ah, 5 Ah, 4.5 Ah, 4.3 Ah, 4.2 Ah, 4.1 Ah, or 4.0 Ah.

The facing area between the positive active material layer and negative active material layer of the energy storage device according to an embodiment of the present invention is preferably 4000 cm$^2$ or more and 10,000 cm$^2$ or less. The lower limit of the facing area may be more preferably 4500 cm$^2$, 5000 cm$^2$, 5500 cm$^2$, or 6000 cm$^2$. In the energy storage device with a constant rated capacity, the facing area between the positive active material layer and the negative active material layer is equal to or more than the lower limit mentioned above, thereby allowing the power of the energy storage device to be increased. The upper limit of the facing area may be more preferably 9000 cm$^2$, 8000 cm$^2$, 7000 cm$^2$, 6500 cm$^2$, 6000 cm$^2$, or 5500 cm$^2$. In the energy storage device with a constant rated capacity, the facing area between the positive active material layer and the negative active material layer is equal to or less than the upper limit mentioned above, thereby allowing the capacity density to be increased.

The energy storage device according to an embodiment of the present invention has power, and achieves a balance between a high capacity density and the high power. For this reason, the energy storage device can be particularly suitably used for applications that require both a high capacity density and high power. The energy storage device is suitable as, for example, a power source for automobiles such as an electric vehicles (EVs), a hybrid electric vehicles (HEVs), or a plug-in hybrid electric vehicles (PHEVs), and particularly suitable for an HEVs.

The shape of the energy storage device according to the present embodiment is not particularly limited, and examples thereof include cylindrical batteries, prismatic batteries, flat batteries, coin batteries, and button batteries.

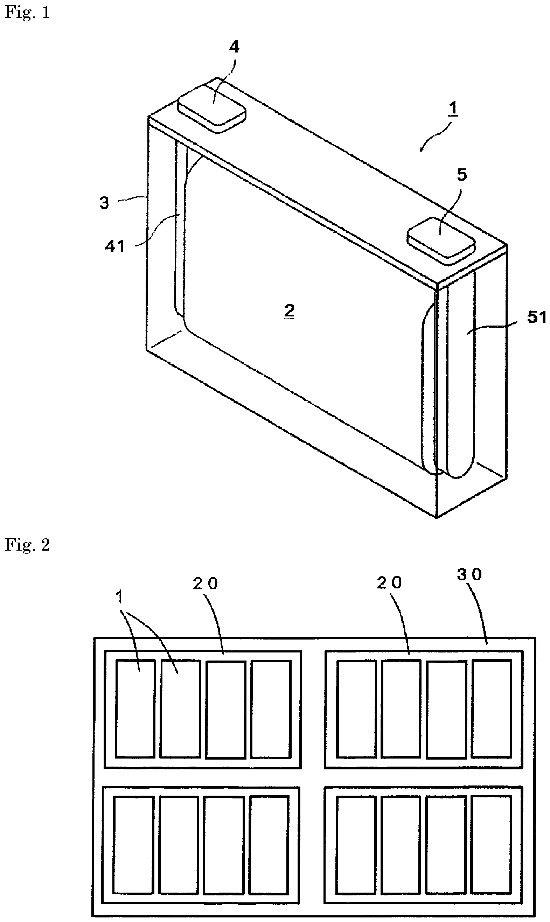

Fig. 1 shows an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

<Energy storage apparatus>

The energy storage device according to the present embodiment can be mounted as an energy storage unit (battery module) configured by assembling a plurality of energy storage devices on a power source for automobiles such as EVs, HEVs, and PHEVs, a power source for electronic devices such as personal computers and communication terminals, a power source for power storage, or the like. In this case, the technique of the present invention may be applied to at least one energy storage device included in the energy storage unit.

Fig. 2 shows an example of an energy storage apparatus 30 obtained by assembling energy storage units 20 each obtained by assembling two or more electrically connected energy storage devices 1. The energy storage apparatus 30 may include a busbar (not illustrated) for electrically connecting two or more energy storage devices 1 and a busbar (not illustrated) for electrically connecting two or more energy storage units 20. The energy storage unit 20 or the energy storage apparatus 30 may include a state monitor (not illustrated) that monitors the state of one or more energy storage devices.

<Method for manufacturing energy storage device>

A method for manufacturing the energy storage device according to the present embodiment can be appropriately selected from publicly known methods. The manufacturing method includes, for example, preparing an electrode assembly, preparing an electrolyte, and housing the electrode assembly and the electrolyte in a case. Preparing the electrode assembly includes: preparing a positive electrode and a negative electrode, and forming an electrode assembly by stacking or winding the positive electrode and the negative electrode with a separator interposed therebetween.

Housing the electrolyte in the case can be appropriately selected from known methods. For example, in the case of using an electrolyte solution such as a nonaqueous electrolyte solution for the electrolyte, the electrolyte solution may be injected from an inlet formed in the case, and the inlet may be then sealed.

<Other embodiments>

It is to be noted that the electrolyte energy storage device according to the present invention is not limited to the embodiment mentioned above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to the configuration according to an embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape and the like of the nonaqueous electrolyte energy storage device are arbitrary. The present invention can also be applied to capacitors such as various secondary batteries, electric double-layer capacitors, or lithium ion capacitors. The energy storage device according to the present invention can also be applied to an energy storage device in which the electrolyte is an electrolyte other than nonaqueous electrolytes, that is, an energy storage device in which the electrolyte includes water, and the like.

While the electrode assembly with the positive electrode and the negative electrode stacked with the separator interposed therebetween has been described in the embodiment mentioned above, the electrode assembly does not have to include the separator. For example, the positive electrode and the negative electrode may be brought into direct contact with each other, with a non-conductive layer formed on the active material layer of the positive electrode or negative electrode.

EXAMPLES

Hereinafter, the present invention will be described more specifically with reference to examples, but the present invention is not to be considered limited to the following examples.

[Example 1]

(Fabrication of positive electrode)

A positive composite paste was prepared with the use of $LiNi_{1/3}Co_{1/3}Mn_{1/3}O_2$ as a positive active material, acetylene black (AB) as a conductive agent, a polyvinylidene fluoride (PVDF) as a binder, and N-methylpyrrolidone (NMP) as a dispersion medium. It is to be noted that the mass ratios of the positive active material, AB, and PVDF were set to be 93 : 4 : 3 (in terms of solid content). The positive composite paste was applied to both surfaces of an aluminum foil as a positive substrate, and dried. Thereafter, roll pressing was performed to obtain a positive electrode. The average thickness of the positive active material layer (per layer) was 28 $\mu$m, and the porosity thereof was 42%.

(Fabrication of negative electrode)

Solid natural graphite as a negative active material, a styrenebutadiene rubber (SBR) as a binder, carboxymethyl cellulose-ammonium (CMC-NH$_4$) as a thickener, and water as a dispersion medium were mixed to prepare a negative composite paste. It is to be noted that the mass ratios of solid natural graphite, SBR, and CMC-NH$_4$ were set to be 98 : 1: 1 (in terms of solid content). The negative composite paste was applied to both surfaces of a copper foil as a negative substrate, and dried. Thereafter, roll pressing was performed to obtain a negative electrode. The porosity of the solid natural graphite was 0.49%. In addition, the average thickness of the negative active material layer (per layer) was 34 $\mu$m, and the porosity thereof was 45%.

(Nonaqueous electrolyte solution)

LiPF$_6$ was dissolved at a concentration of 1.2 mol/dm$^3$ in a solvent obtained by mixing an ethylene carbonate and an ethyl methyl carbonate at a volume ratio of 30 : 70 to obtain a nonaqueous electrolyte solution.

(Separator)

A polyolefin microporous membrane was used for the separator.

(Assembly of energy storage device)

The positive electrode, the negative electrode, and the separator were used to obtain a wound electrode assembly. In the fabrication of the electrode assembly, the facing area between the positive active material layer and the negative active material layer was adjusted to be 6650cm$^2$. The electrode assembly was housed in a prismatic case, and a nonaqueous electrolyte solution was injected, and the case is then sealed. Thus, an energy storage device according to Example 1 was obtained. For the obtained energy storage device, the rated capacity in the following capacity confirmation test was 4.20 Ah, and the rated capacity (capacity density) per facing area between the positive active material layer and negative active material layer was 0.63 mAh/cm$^2$.

[Examples 2 to 6 and Comparative Example 1]

Each of energy storage devices according to Examples 2 to 6 and Comparative Example 1 was obtained similarly to Example 1, except for changing the mass of the positive composite paste and/or negative composite paste applied per unit area, the facing area between the positive active material layer and the negative active material layer, and the average thickness of the positive active material layer and/or the negative active material layer. The rated capacity in the following capacity confirmation test, the facing area between the positive active material layer and the negative active material layer, and the rated capacity (capacity density) per facing area between the positive active material layer and the negative active material layer had values in Table 1 in each of the energy storage devices according to Examples 2 to 6 and Comparative Example 1.

[Comparative Examples 2 to 5]

Each of energy storage devices according to Comparative Examples 2 to 5 was obtained similarly to Example 1, except for using hollow natural graphite (porosity: 3.68%) instead of the solid natural graphite and changing the mass of the positive composite paste and/or negative composite paste applied per unit area, the facing area between the positive active material layer and the negative active material layer, and the average thickness of the positive active material layer and/or the negative active material layer. The rated capacity in the following capacity confirmation test, the facing area between the positive active material layer and the negative active material layer, and the rated capacity (capacity density) per facing area between the positive active material layer and the negative active material layer had values in Table 1 in each of the energy storage devices according to Comparative Examples 2 to 5. Further, in Comparative Example 4 and Comparative Example 5, the charge depth of the hollow graphite was adjusted by changing the mass of the positive composite paste and/or negative composite paste applied, so as to be lower than the charge depth of the solid graphite or hollow graphite in Examples 1 to 6 and Comparative Examples 1 to 3.

(Capacity confirmation test)

In a thermostatic chamber at 25°C, the energy storage devices were subjected to constant current charge at a charge current of 1.0 C and an end-of-charge voltage of 4.10 V, and then to constant voltage charge at 4.10 V. With regard to the charge termination conditions, the charge was performed until the total charge time reached 3 hours. Thereafter, a pause time of 10 minutes was provided. Thereafter, the energy storage devices were subjected to constant current discharge at a discharge current of 1.0 C and an end-of-discharge voltage of 2.50 V. Then, the measured discharge capacity was defined as a rated capacity. It is to be noted that the charge current and the discharge current were determined, based on the discharge capacity (hereinafter, referred to also as a "design capacity") expected from the design of each of the energy storage devices obtained with the use of the mass of the positive composite paste and negative composite paste applied, the facing area between the positive active material layer and the negative active material layer, and the like. The design capacity and the rated capacity have shown good agreement with each other.

(Evaluation)

The respective energy storage devices according to Reference Examples 4 and 5, subjected to the initial charge-discharge mentioned above, were subjected to constant current charge at a current of 1.0 C at 25°C until reaching the electric quantity corresponding to 50% of the rated capacity, thereby reaching the SOC of 50%. Subsequently, the energy storage devices were discharged at each current of 0.2 C, 0.5 C, or 1.0 C for 30 seconds. After completion of each discharge, the energy storage devices were subjected to constant current charge at a current of 1.0 C to the SOC of 50%. The relationship between the current and the voltage at 10 seconds after the start of the discharge for each discharge was plotted, and the low-temperature direct-current resistance was determined from the slope of a straight line obtained from the plot of three points. The power at 10 seconds after the start of the discharge was calculated from the obtained direct-current resistance. The power of each of the energy storage devices with the power of the energy storage device according to Comparative Example 2 as a criteria (100%) is shown in Table 1. It is to be noted that the current values for the charge and discharge are determined based on the design capacity.

Table 1 shows therein, as a capacity density (mAh/cm$^2$), the rated capacity per facing area between the positive active material layer and the negative active material layer. In addition, Table 1 shows therein the value of the product of the capacity density (mAh/cm$^2$) and the power (relative value: %) as an index indicating that a balance is achieved between the high capacity density and the high power.

[Table 1]

| | | Rated capacity (Ah) | Facing area (cm$^2$) | Capacity density (mAh/cm$^2$) | Power (%: relative value) | Capacity density × Power |
|---|---|---|---|---|---|---|
| Example 1 | Solid natural graphite | 4.20 | 6,650 | 0.63 | 123 | 78 |
| Example 2 | Solid natural graphite | 4.20 | 5,982 | 0.70 | 115 | 81 |
| Example 3 | Solid natural graphite | 4.20 | 5,310 | 0.79 | 109 | 86 |
| Example 4 | Solid natural graphite | 4.20 | 4,643 | 0.90 | 99 | 90 |
| Comparative Example 1 | Solid natural graphite | 4.20 | 3,981 | 1.06 | 88 | 93 |

(continued)

| | | Rated capacity (Ah) | Facing area (cm$^2$) | Capacity density (mAh/cm$^2$) | Power (%: relative value) | Capacity density $\times$ Power |
|---|---|---|---|---|---|---|
| Example 5 | Solid natural graphite | 3.90 | 6,620 | 0.59 | 124 | 73 |
| Example 6 | Solid natural graphite | 3.73 | 5.318 | 0.70 | 107 | 75 |
| Comparative Example 2 | Hollow natural graphite | 4.20 | 6,657 | 0.63 | 100 | 63 |
| Comparative Example 3 | Hollow natural graphite | 4.20 | 8,480 | 0.50 | 113 | 56 |
| Comparative Example 4 | Hollow natural graphite | 4.20 | 6,001 | 0.70 | 95 | 66 |
| Comparative Example 5 | Hollow natural graphite | 4.20 | 5,008 | 0.84 | 66 | 55 |

As shown in Table 1, for each of the energy storage devices according to Examples 1 to 6 with the solid graphite used and the capacity density (the rated capacity per facing area between the positive active material layer and the negative active material layer) in the range of 0.59 mAh/cm$^2$ or more and 0.90 mAh/cm$^2$ or less, the power (relative value) was 95% or more, and the value of the product of the capacity density and the power (relative value) was 70 or more. As described above, for each of the energy storage devices according to Examples 1 to 6, the power was high, and a balance was achieved between the high capacity density and the high power.

In contrast, for the energy storage device according to Comparative Example 1 with the reduced facing area between the positive active material layer and the negative active material layer and the capacity (capacity density) per facing area in excess of 0.90 mAh/cm$^2$, the power was low. In addition, for each of the energy storage devices according to Comparative Examples 2 to 5 with the hollow graphite used instead of the solid graphite, the product of the capacity density and the power (relative value) was less than 70, and a balance failed to be achieved between the high capacity density and the high power.

Table 2 shows therein the average thicknesses and porosities of the respective positive active material layer (per layer) and negative active material layer (per layer) according to each of the examples and comparative examples mentioned above.

[Table 2]

| | Average thickness of positive active material layer (per layer) ($\mu$m) | Porosity of positive active material layer (%) | Average thickness of negative active material layer (per layer) ($\mu$m) | Porosity of negative active material layer (%) |
|---|---|---|---|---|
| Example 1 | 22 | 42 | 30 | 45 |
| Example 2 | 25 | 42 | 33 | 45 |
| Example 3 | 28 | 42 | 37 | 45 |
| Example 4 | 32 | 42 | 43 | 45 |
| Comparative Example 1 | 37 | 42 | 50 | 45 |
| Example 5 | 21 | 42 | 28 | 45 |
| Example 6 | 25 | 42 | 33 | 45 |
| Comparative Example 2 | 22 | 42 | 25 | 35 |
| Comparative Example 3 | 17 | 42 | 20 | 35 |
| Comparative Example 4 | 24 | 42 | 31 | 35 |
| Comparative Example 5 | 29 | 42 | 43 | 35 |

The present invention can be applied to energy storage devices and the like for use as power sources for electronic devices such as personal computers and communication terminals, automobiles, and the like.

DESCRIPTION OF REFERENCE SIGNS

1: Energy storage device

2: Electrode assembly

3: Case

4: Positive electrode terminal

41: Positive electrode lead

5: Negative electrode terminal

51: Negative electrode lead

20: Energy storage unit

30: Energy storage apparatus

**Claims**

1. An energy storage device comprising a positive electrode including a positive active material layer and a negative electrode including a negative active material layer,

   wherein a rated capacity per facing area between the positive active material layer and the negative active material layer is 0.59 mAh/cm$^2$ or more and 0.90 mAh/cm$^2$ or less, and
   the negative active material layer includes solid graphite.

2. The energy storage device according to claim 1, wherein the negative active material layer has an average thickness of 20 $\mu$m or more and 60 $\mu$m or less.

3. The energy storage device according to claim 1, wherein the negative active material layer has a porosity of 25% or more and 50% or less.

4. The energy storage device according to claim 1, wherein a facing area between the positive active material layer and the negative active material layer is 4000 cm$^2$ or more and 10,000 cm$^2$ or less.

5. The energy storage device according to claim 1, wherein a rated capacity is 3.7Ah or more.

6. The energy storage device according to any one of claims 1 to 5, wherein the energy storage device is used for a hybrid electric vehicle.

Fig. 1

Fig. 2

## INTERNATIONAL SEARCH REPORT

| International application No. |
|---|
| **PCT/JP2023/013035** |

**A. CLASSIFICATION OF SUBJECT MATTER**

*H01M 10/0525*(2010.01)i; *H01M 4/587*(2010.01)i
FI: H01M10/0525; H01M4/587

According to International Patent Classification (IPC) or to both national classification and IPC

**B. FIELDS SEARCHED**

Minimum documentation searched (classification system followed by classification symbols)

H01M10/0525; H01M4/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/104145 A1 (UNIVERSITY OF TOKYO) 22 June 2017 (2017-06-22)<br>claims, example 2 | 1-6 |
| Y | JP 2020-191224 A (GS YUASA INTERNATIONAL LTD.) 26 November 2020 (2020-11-26)<br>paragraphs [0041]-[0050] | 1-6 |

| ☐ Further documents are listed in the continuation of Box C. | ☑ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT<br>Information on patent family members | | International application No.<br>**PCT/JP2023/013035** |
|---|---|---|

| Patent document<br>cited in search report | Publication date<br>(day/month/year) | Patent family member(s) | Publication date<br>(day/month/year) |
|---|---|---|---|
| WO      2017/104145      A1 | 22 June 2017 | (Family: none) | |
| JP      2020-191224      A | 26 November 2020 | (Family: none) | |

Form PCT/ISA/210 (patent family annex) (January 2015)

**EP 4 525 115 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005222933 A
- JP 2017069039 A